# EUROPEAN PATENT SPECIFICATION

(11) **EP 2 436 840 B1**
(45) Date of publication and mention of the grant of the patent: **30.09.2015**
(21) Application number: 11169520.1
(22) Date of filing: 10.06.2011
(51) Int. Cl.: E01F 8/02, A01G 9/02, A01G 1/00, E04D 11/00

(54) **System and method for covering a structure such as a wall or a roof with trays and a sound barrier provided with such a system**
System und Verfahren zum Abdecken einer Struktur wie eine Wand oder ein Dach mit Schalen und Schallschutzwand mit einem solchen System
Système et méthode pour la couverture d'une structure comme un mur ou un toit avec des plateaux et mur anti-bruit équipé d'un tel système

(30) Priority: 30.09.2010 NL 1038277
(43) Date of publication of application: 04.04.2012
(73) Proprietor: 247 Invest B.V., 6961 DV Eerbeek (NL)
(72) Inventor: Bongers, Wilhelmus, Jacobus, 7000 AH Doetinchem (NL)
(74) Representative: Mink-Lindenburg, Charlotte Hildegard

(56) References cited:
- DE-U1- 29 921 109
- FR-A1- 2 939 275

## Description

The present invention relates to a system for covering a structure such as a wall or roof with trays with plants and/or panels.

German Gebrauchsmuster DE 299 21 109 U discloses such a system,
which system is provided with a number of trays, a number of profiles or strips which are adapted for attachment to the structure, and a number of support members on which the trays can support, which support members can be attached to the profiles or strips such that the trays can be ordered in columns and rows.

The known system comprises generally T-shaped strips which also serve as support member for supporting standard trays. The T-shaped strips are attached to the structure by means of a spacer. The trays are attached in pairs to each support member by means of a separate cover element which is pushed over each support member and secures the trays in pairs.

The known system has the drawback that assembly of the trays on the structure is time-consuming. This is because both the spacers and the strips with support members have to be mounted on the structure individually. The trays then have to be attached in pairs to the strips with support members. At least two people are therefore always required for the assembly, wherein at least one person fixes each tray in the desired position while the other person secures the tray. A further drawback is formed by the visible cover elements which secure the trays in pairs. Because of the relatively slow growth of sedum, they will remain visible for a long time. It therefore takes a long time before the desired effect of a green wall is obtained.

The present invention has its object to provide a system according to claim 1 which obviates these drawbacks.

The system according to the invention has for this purpose the feature that each support member is provided with a generally U-shaped part and that each tray and/or each panel is provided with a first protrusion on one side and is provided with a second protrusion on an opposite side, wherein the first protrusion is intended to be received in the U-shaped part of a first support member, and wherein the second protrusion is intended for placing against the U-shaped part of a second support member such that each tray can be attached in secured manner to the structure by means of at least two support members.

As an alternative to the profiles or strips, the system according to the invention is provided with cables.

J According to a practical preferred embodiment, the support members can be mounted releasably on the profiles, strips or cables. The releasable support members can be mounted easily and quickly on the profiles, strips or cables on site, this enhancing the flexibility of the system according to the invention. It is now possible to opt for trays of diverse dimensions. The distance between adjacent support members can then be adapted to the desired dimensions of the trays.

According to a first preferred embodiment, each support member is provided with a hook-like outer end and each strip or each profile is adapted to receive the hook-like outer end. The strips are preferably provided with a number of openings intended to receive the hook-like outer end. Each profile is preferably provided at a first outer end with a C-shaped part intended to receive the hook-like outer end.

According to a further preferred embodiment, each profile is provided at a second outer end with an anchor for attaching the profile to the structure. Each profile can be attached to the structure in rapid and reliable manner by means of an anchor.

The present invention also relates to a method for covering a structure such as a wall or roof with the alternative of the system in which the system is provided with profiles or strips, wherein trays with plants and/or panels ordered in at least substantially horizontal rows and columns running at least substantially perpendicularly thereof are attached almost uninterruptedly to the structure, wherein the structure is provided beforehand in a direction of the columns with strips or profiles running parallel to each other and each provided with mutually equidistant support members on which the trays support, so that the trays and/or panels can be placed on the support members in simple manner.

This method is known from DE 299 21 109 U The method according to the invention is distinguished in that the structure is provided beforehand in a direction of the columns with the strip or with the profiles of said system, wherein the strips or the profiles are anchored in the structure, wherein each tray is individually clampingly received between two adjacent support members and is automatically secured as a result of the clamping.

The present invention also relates to a method for covering a structure such as a wall or roof with the alternative of the system in which the system is provided with cables, wherein trays with plants and/or panels ordered in at least substantially horizontal rows and columns running at least substantially perpendicularly thereof are attached almost uninterruptedly to the structure, wherein the structure is provided beforehand in a direction of the columns with cables running parallel to each other and each provided with mutually equidistant support members on which trays support, characterized in that the structure is provided beforehand in a direction of the columns with the cables of said system according to the invention, wherein the cables are tensioned over a non-concave structure and wherein the cables fix the support members, wherein each tray is individually clampingly received between two adjacent support members and is automatically secured as a result of the clamping.

Such a construction can for instance be applied in a surface curved in one direction, such as a roof. It is then sufficient to only fix the outer ends of the cables so that there is no need to drill into the roof.

A further advantageous embodiment has the feature that the trays are filled prior to mounting with a substrate in which sedum, moss and/or succulents are planted or sown. In this manner an attractive green roof and/or a green wall can be realized which requires no maintenance. Because a very thin substrate is sufficient for sedum in particular, the weight added by the system can be kept very low.

The invention also relates to a noise barrier provided with the system according to the invention. In a preferred embodiment the noise barrier is provided with a plate-like part in which is arranged a recess in which trays with plants and/or panels are arranged and held in place using the profiles, strips or cables and the support members. The noise barrier is preferably provided with two supports with which the stability of the noise barrier is ensured. Alternatively, the noise barrier is provided with lifting eyes which are adapted to lift the noise barrier including the plant trays or panels. In this embodiment the noise barrier can be wholly prefabricated and transported to any desired location.

The invention will now be further elucidated with reference to the following figures, wherein:
Fig. 1A shows a schematic front view of a possible embodiment of a noise barrier provided with plant trays according to the invention;
Fig. 1 B shows a schematic side view of this embodiment;
Fig. 2 shows a schematic cross-section of a possible embodiment of a plant tray according to the invention, together with the hooks anchored in the noise barrier;
Fig. 3A shows a schematic side view of a possible embodiment of a panel according to the invention;
Fig. 3B shows a schematic side view of an alternative embodiment of a panel which does not form part of the invention;

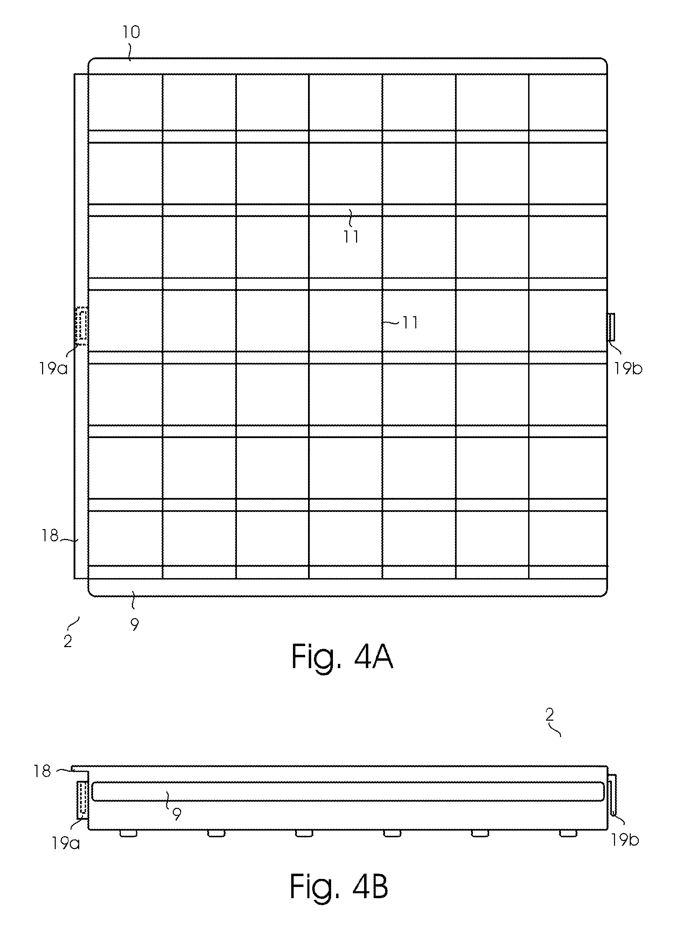

Fig. 4A shows a schematic front view of a possible embodiment of a plant tray according to the invention;
Fig. 4B shows a schematic side view of this plant tray;
Fig. 5 shows a schematic front view of a number of plant trays according to the invention mounted on strips;
Fig. 6A shows a schematic front view of a part of a roof curving to some extent in a vertical direction and provided with plant trays according to the invention;
Fig. 6B shows a schematic side view of this part of a roof;
Fig. 7 shows in more detail a possible embodiment of a plant tray according to the invention,
together with a cable tensioned over the roof;
Fig. 8A, 8B and 8C show an alternative embodiment of a system according to the invention;
Fig. 9A and 9B show a further alternative embodiment of a system according to the invention; and
Fig. 10A and 10B show in more detail the support member as part of the system of fig. 8A, 8B, 8C, 9A and 9B in respectively schematic and side view.

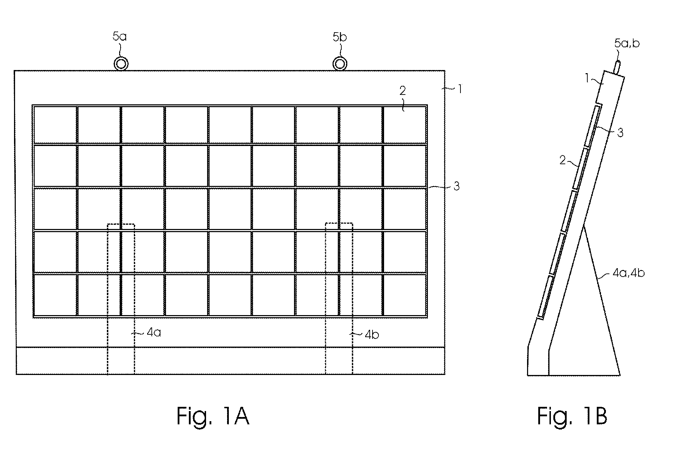

Fig. 1A shows a schematic front view of a possible embodiment of a noise barrier 1 provided with plant trays or panels 2 according to the invention. Noise barrier 1 consists of a plate-like part which is provided with a recess 3 in which plant trays or panels 2 are arranged and held in place using clamp connections not shown in the figure, in addition to two supports 4a,4b with which the stability of noise barrier 1 is ensured. Because the weight of plant trays or panels 2 is negligible relative to the weight of noise barrier 1, they can be placed including plant trays or panels 2. Lifting eyes 5a,5b here ensure that the noise barrier can be easily picked up and the clamp connections ensure that plant trays or panels 2 remain in place. The clamp connections also make it possible to replace for instance individual plant trays with for instance solar panels or signs with traffic directions or advertising messages, as long as the dimensions thereof mutually correspond.
Fig. 1 B shows a schematic side view of this embodiment with noise barrier 1, plant trays or panels 2, recess 3 in which plant trays or panels 2 are arranged, supports 4a,4b with which the stability of noise barrier 1 is ensured and lifting eyes 5a,b with which noise barrier 1 can be easily picked up.

It is of course also possible to give noise barrier 1 a trapezium-shaped cross-section so that supports 4a,4b can be omitted. It is then also possible to arrange a recess 3 on either side so that both sides can be provided with plant trays or panels 2.

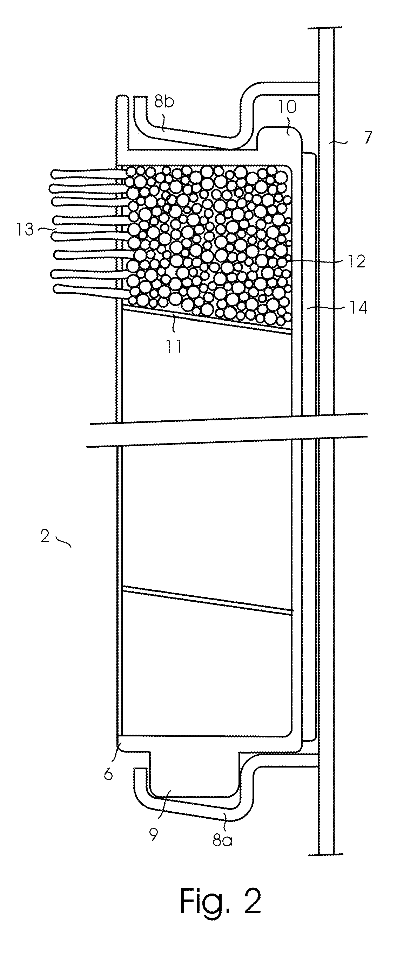

Fig. 2 shows a schematic cross-section of a possible embodiment of a plant tray 2 according to the invention, wherein plant tray 2 comprises a tray 6 which is manufactured from plastic so that manufacture can take place in an injection moulding process. Metal strips 7 are anchored in recess 3 of noise barrier 1, preferably by being arranged in the formwork during casting of noise barrier 1. Welded onto strips 7 are hooks 8a,8b,.. which are embodied such that they are to some extent resilient. On the underside tray 6 is provided with a rib 9 which runs over the whole width and can be placed in a hook 8a. On the upper side tray 6 is provided with a rib 10 which runs over the whole width and which, after rib 9 has been placed in hook 8a, can bend a hook 8b located thereabove upward until rib 10 is in the position shown in the figure, after which tray 6 is safely secured. Tray 6 is preferably provided with partitions 11, so creating cells which can be partially filled with substrate 12 in which for instance sedum 13 is planted.

Trays 6 are preferably further provided on the rear side with ribs 14 so that the rear sides can be aerated and surplus water can flow away freely.

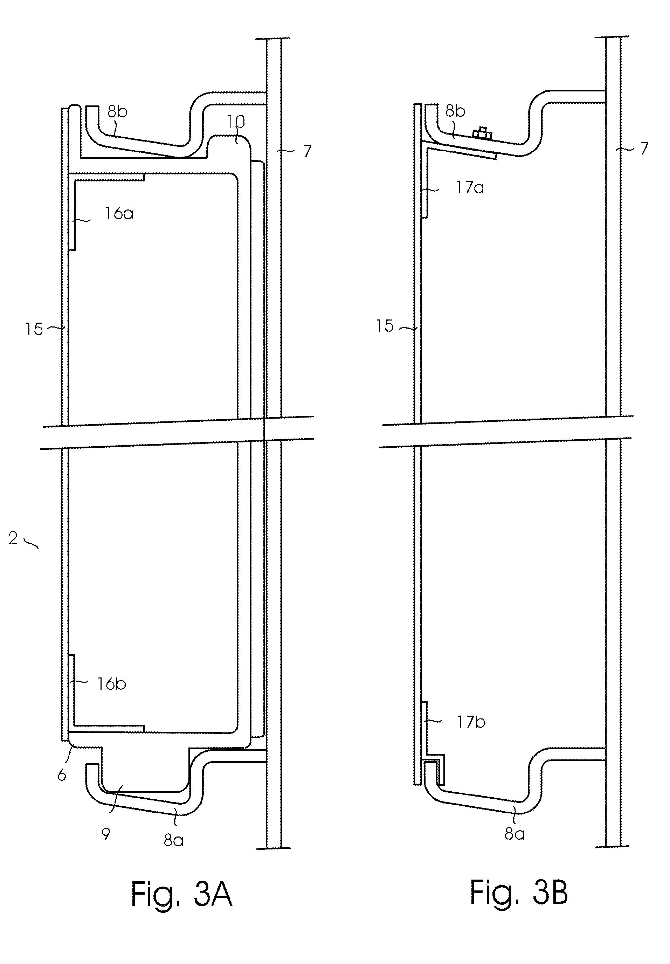

Fig. 3A shows a schematic side view of a possible embodiment of a panel 2 according to the invention, here consisting of a per se known solar panel 15 provided with two glued aluminium profiles 16a,16b which are glued or screwed into a tray 6 so that plant trays or panels 2 can be mutually interchanged in simple manner. Signs with traffic directions or advertising messages or LCD screens can of course also be mounted in the same manner.

Fig. 3B shows a schematic side view of an embodiment which does not form part of the invention, wherein solar panel 15 is provided with two glued aluminium profiles 17a,17b which are embodied such that solar panel 15 can be mounted directly on hooks 8a,8b and a tray 6 is thus not necessary. Profile 17b is placed here on hook 8a and profile 17a is then attached to hook 8b with for instance a screw connection.

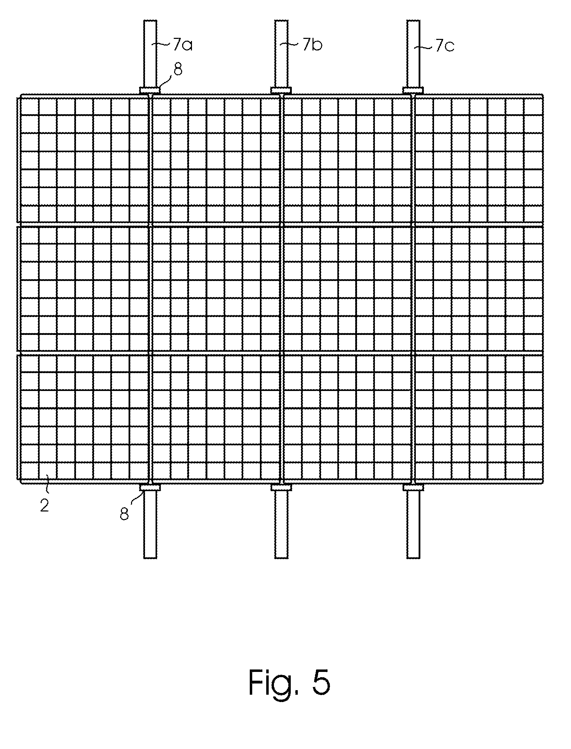

Fig. 5 shows a schematic front view of a number of plant trays 2 according to the invention mounted on strips 7a,7b,7c, wherein plant trays 2 are clamped between hooks 8.

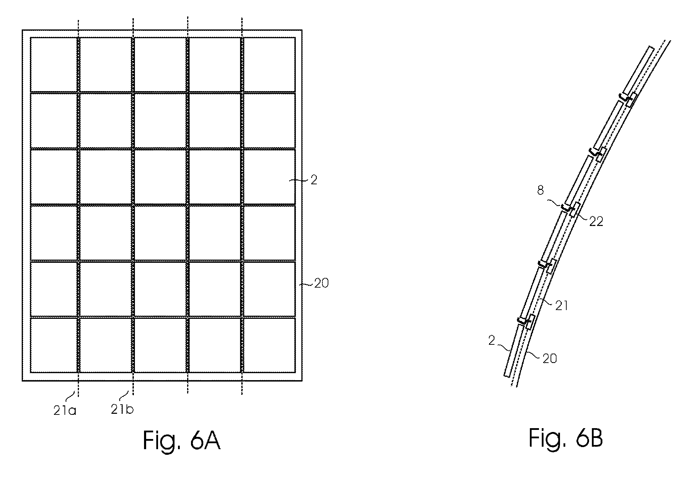

Fig. 6A shows a schematic front view of a part of a roof 20 which is slightly curved in a vertical direction and provided with plant trays or panels 2 according to the invention. Co-casting of strips 7 or mounting strips 7 6 by means of drilling and screwing is generally not an option, for instance because an existing construction is involved. For this reason steel cables 21a,21b,.. are tensioned over roof 20, to which cables are attached hooks 8 (not shown in the figure) between which the plant trays or panels 2 are clamped.

Fig. 6B shows a schematic side view of this part of a roof, with plant trays or panels 2 which are attached using hooks 8 to steel cables 21 tensioned over the roof, this via spacers 22 which on the one hand hold the steel cables 21 at a predetermined distance from the groove and on the other form the carriers for the hooks 8 between which plant trays or panels 2 are clamped.

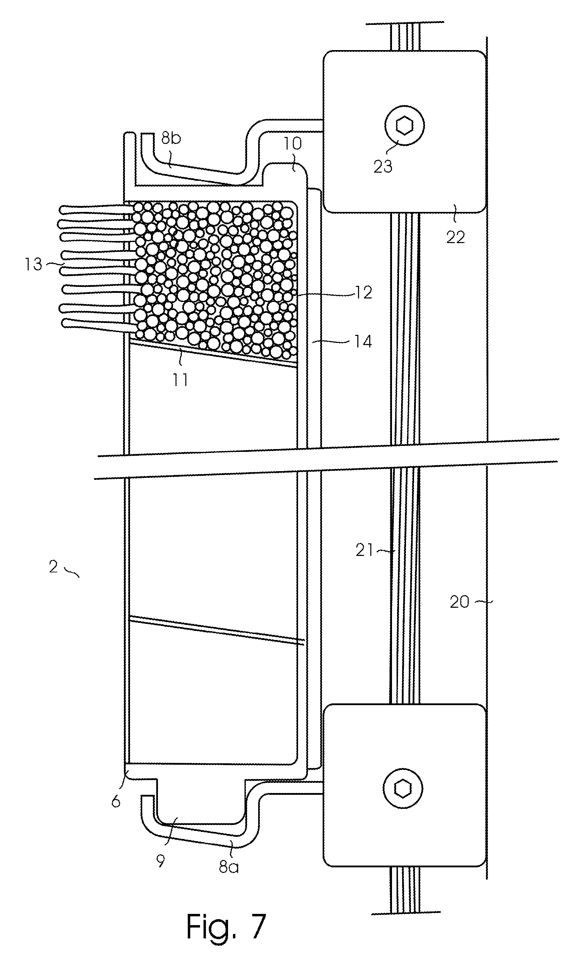

Fig. 7 shows in more detail a possible embodiment of a plant tray or panel 2 according to the invention together with a cable 21 tensioned over a roof 20. Cable 21 is provided here with the required number of spacers 22 embodied as steel blocks, after which cable 21 is tightened such that spacers 22 can still just be shifted. Spacers 22 are now for instance pushed into place using a template and glued to roof 20. Cable 21 is then tightened further, after which spacers 22 are fixed to cable 21 using a bolt 23. Plants trays or panels 2 can now be easily clamped in place, wherein the complementary coupling members 19a,19b of trays 6 provide for a mutual locking in a direction perpendicularly of cables 21.

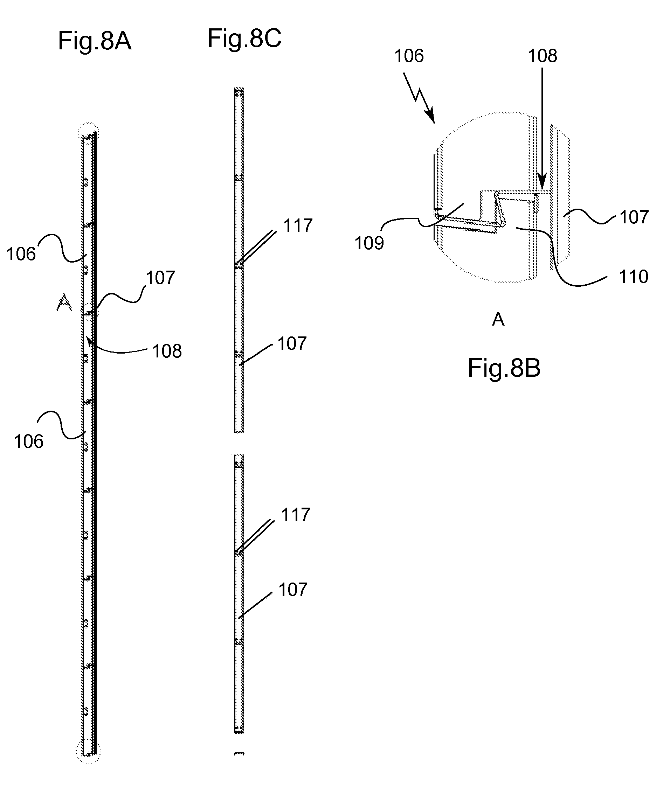

Figure 8A shows a cross-section of an alternative embodiment of a system according to the invention. Figure 8B shows a part of the system of figure 8A in more detail. Figure 8C shows a front view of a strip as part of the system of figure 8A.

Figure 8A shows a part of a system according to the invention. Three trays 106 are placed on a structure (not shown) one above another or in columns by means of a strip 107 and support members 108. Figure 8B shows a part of the system of figure 8A in more detail, including a part of a first tray 106, i.e. the underside, and a part of a second tray 106, i.e. the upper side, which are arranged adjacently of the structure (not shown) by means of a strip 107 and an intermediate support member 108. Each tray 106 is provided on the underside with a rib or protrusion 109. Each tray 106 is provided on the upper side with a rib or protrusion 110. Protrusion 109 is located close to the open side or front side of tray 106.

Protrusion 110 is located close to the closed or rear side of tray 106. Support member 108 is provided with a generally U-shaped part which is intended to receive first protrusion 109.

Protrusion 110 of the adjacently placed tray 106 is intended for placing against the U-shaped part of support member 108. Tray 106 is mounted on the structure in secured manner on two opposite sides by means of two support members 108. Figure 8C shows a front view of strip 107. Shown here is that strip 107 is provided with openings 117 for receiving support member 108. Strip 107 is preferably generally U-shaped.

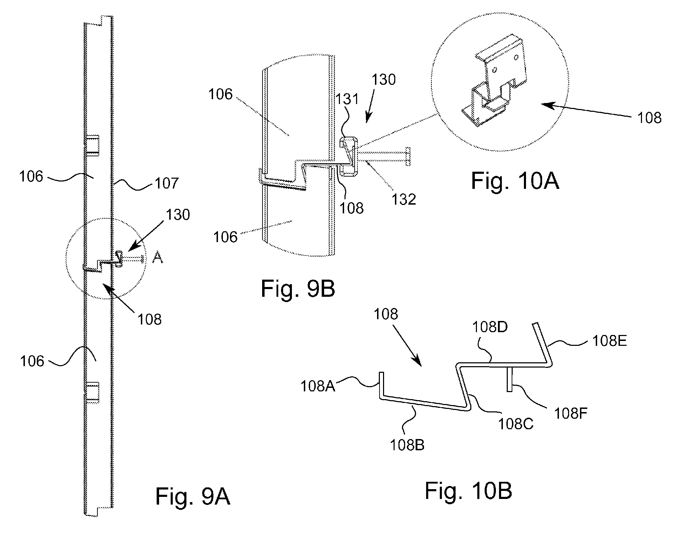

Figure 9A shows a further alternative embodiment of the system according to the invention. The system in figure 9A has many similarities to the system of figure 8A. The difference between the two systems is in the application of a profile 130 instead of a strip 107 for mounting on the structure.

Profile 130 is provided with a generally C-shaped part 131 and an anchor 132 attached thereto. Anchor 132 serves to fix profile 130 to a structure. The generally C-shaped part 131 is adapted for releasable mounting of support member 108.

Figures 10A and 10B show support member 108 in more detail in respectively schematic and side view.

Each support member 108 is provided with a hook-like outer end 108E which is adapted to be received in openings 117 of strip 107 or in the generally C-shaped part 131 of profile 130.

At the other outer end each support member 108 is provided with an upright edge 108A which is intended for the purpose of enclosing the open side of the tray. A middle part, which is generally Z-shaped, extends between edge 108A and hook 108E. The Z-shape comprises elements 108B, 108C and 108D, which are mutually connected. Element 108C forms an acute angle with both element 108B and element 108D. Owing to this acute angle protrusion 110 of tray 106 can be clampingly received against the U-shaped part of support member 108. This U-shaped part is formed by upright edge 108A, element 108B and element 108C. Arranged on element 108D is a further edge 108F which extends in opposite direction to upright edge 108A. The further edge 108F contributes toward the clamping arrangement of protrusion 110 behind element 108C. Further edge 108F also serves as spacer for the purpose of maintaining a desired distance between tray 106 and the structure. The adverse effect of moisture on the structure can hereby be prevented. In the shown preferred embodiment tray 106 is provided with a recess for receiving further edge 108F. This is not essential however. Further edge 108F can also lie against the closed side of tray 106. Hook-like part 108E is intended for hooking into the generally C-shaped part 131 of profile 130 or into one of the openings 117 of strip 107.

The present invention is expressly not limited to the shown and described embodiments but extends to all possible combinations thereof. Trays 106 can in particular be provided in similar manner to trays 6 with panels, traffic signs or screens, for instance by means of connecting elements such as profiles 16a,b of figure 3A which attach the panels, traffic signs or screens to the trays. Alternatively, connecting elements such as profiles 17a,b of figure 3B can be applied for direct attachment of the panels, traffic signs or screens to support members 106. Noise barrier 1 of figure 1B can also be provided with trays 106, strips 107 or profiles 130 and support members 108. Trays 106 and support members 108 can moreover be applied in combination with cables 21 and spacers 22 of figure 7. Spacers 22 are then preferably adapted for releasable mounting of support members 108.

The present invention therefore extends to any embodiment falling within the scope of protection as defined in the claims and as seen in the light of the foregoing description and associated drawings.

## Claims

1. System for at least partially covering a structure such as a wall or roof with trays with plants and/or panels (2) which system is provided with a number of trays (6; 106), a number of profiles (130) or strips (7; 107) or cables (21) which are adapted for attachment to the structure, and a number of support members (8; 108) on which the trays can support, which support members can be attached to the profiles, strips or cables such that the trays can be ordered in columns and rows, wherein each support member (8; 108) is provided with a generally U-shaped part (108A; 108B; 108C) and that each tray (6; 106) is provided with a first protrusion (9; 109) on one side and provided with a second protrusion (10; 110) on an opposite side, wherein the first protrusion (9; 109) is intended to be received in the U-shaped part of a first support member (8; 108), and wherein the second protrusion (10; 110) is intended for placing against the U-shaped part of a second support member (8; 108) such that each tray can be attached in secured manner to the structure by means of at least two support members.

2. System as claimed in claim 1, wherein the support members (108) can be mounted releasably on the profiles (130), strips (7; 107) or cables (21).

3. System according to the alternative of claim 1 or 2, where the system is provided with profiles or strips, wherein each support member is provided with a hook-like outer end (108E) and wherein each strip (7; 107) or each profile (130) is adapted to receive the hook-like outer end.

4. System according to the alternative of claim 3, where the system is provided with strips, **characterized in that** each strip (7; 107) is provided with a number of openings (117) intended to receive the hook-like outer end (108E).

5. System according to the alternative of claim 3, where the system is provided with profiles,
**characterized in that** each profile (130) is provided at a first outer end with a generally C-shaped part (131) intended to receive the hook-like outer end (108E).

6. System as claimed in claim 5, **characterized in that** each profile (130) is provided at a second outer end with an anchor (132) for attaching the profile to the structure.

7. System according to the alternative of claim 1 or 2, where the system is provided with cables, **characterized in that** the system comprises spacers (22)
for realizing a predetermined distance between the cables and the structure, wherein at least a number of the spacers are provided with a support member.

8. Method for covering a structure such as a wall or roof with the system according to the alternatives of any of the foregoing claims where the system is provided with profiles (130) or strips (7; 107),
wherein trays with plants and/or panels ordered in at least substantially horizontal rows and columns running at least substantially perpendicularly thereof are attached almost uninterruptedly to the structure, wherein the structure is provided beforehand in a direction of the columns with profiles (130) or strips (7; 107)
running parallel to each other and each provided with
mutually equidistant support members on which the trays support, **characterized in that** the structure is provided beforehand in a direction of the columns with the profiles (130) or strips (7; 107)
of said system, wherein the profiles or strips
are anchored in the structure,
wherein each tray (6; 106) is individually clampingly received between two adjacent support members (8; 108) and is automatically secured as a result of the clamping.

9. Method for covering a structure such as a wall or a roof with the system according to the alternative of any of the foregoing claims where the system is provided with cables (21),
wherein trays with plants and/or panels ordered in at least substantially horizontal rows and columns running at least substantially perpendicularly thereof are attached almost uninterruptedly to the structure, wherein the structure is provided beforehand in a direction of the columns with cables (21)
running parallel to each other and each provided with mutually
equidistant support members on which trays support, **characterized in that** the structure is provided beforehand in a direction of the columns with the cables of said system, wherein the cables are tensioned over a non-concave structure and wherein the cables fix the support members (8; 108), wherein each tray (6; 106) is individually clampingly received between two adjacent support members and is automatically secured as a result of the clamping.

10. Method as claimed in claim 8 or 9, **characterized in that** the trays are filled prior to mounting with a substrate in which sedum, moss and/or succulents are planted or sown.

11. Noise barrier provided with the system as claimed in any of the foregoing claims 1-7.

12. Noise barrier as claimed in claim 11, provided with a plate-like part in which is arranged a recess (3) in which the trays with plants and/or panels (2) are arranged and held in place using the profiles (130), strips (7; 107) or cables (21) and the support members (8; 108).

13. Noise barrier as claimed in claim 11 or 12, wherein the noise barrier is provided with two supports (4a,4b) with which the stability of the noise barrier (1) is ensured.

14. Noise barrier as claimed in claim 11, 12 or 13, wherein the noise barrier is provided with lifting eyes (5a,5b) which are adapted to lift the noise barrier including the plant trays or panels (2).

## Patentansprüche

1. System zum zumindest teilweise Abdecken einer Struktur, wie einer Wand oder eines Daches, mit Schalen mit Pflanzen und/oder Platten (2), wobei das System mit einer Anzahl von Schalen (6; 106), einer Anzahl von Profilen (130) oder Streifen (7; 107) oder Kabeln (21) versehen ist, die ausgebildet sind, um an der Struktur befestigt zu werden und mit einer Anzahl von Stützgliedern (8; 108), auf denen die Schalen abgestützt werden können, wobei die Stützglieder an den Profilen, Streifen oder Kabeln befestigt werden können, so dass die Schalen in Spalten und Reihen angeordnet werden können, wobei jedes Stützglied (8; 108) mit einem im Wesentlichen u-förmigen Teil (108A; 108B; 108C) versehen ist und dass jede Schale (6; 106) an einer Seite mit einem ersten Vorsprung (9; 109) und an der gegenüberliegenden Seite mit einem zweiten Vorsprung (10; 110) versehen ist, wobei der erste Vorsprung zum Eingriff in das u-förmige Teil eines ersten Stützgliedes (8; 108) ausgebildet ist und wobei der zweite Vorsprung (10; 110) zum Positionieren gegen das u-förmige Teil eines zweiten Stützgliedes (8; 108) ausgebildet ist, so dass jede Schale mittels mindestens zweier Stützglieder gesichert an der Struktur befestigt werden kann.

2. System gemäß Anspruch 1, wobei die Stützglieder (108) lösbar an den Profilen (130), Streifen (7; 107) oder Kabeln (21) befestigt werden können.

3. System gemäß der Alternative von Anspruch 1 oder 2, wobei das System mit Profilen oder Streifen versehen ist, wobei jedes Stützglied mit einem hakenartigen äußeren Ende (108E) versehen ist und wobei jeder Streifen (7; 107) oder jedes Profil (130) zur Aufnahme des hakenförmigen äußeren Endes ausgebildet ist.

4. System gemäß der Alternative von Anspruch 3, wobei das System mit Streifen versehen ist, **dadurch gekennzeichnet, dass** jeder Streifen (7; 107) mit einer Anzahl von Öffnungen (117) versehen ist, die ausgebildet sind, um das hakenförmige äußere Ende (108E) aufzunehmen.

5. System gemäß der Alternative von Anspruch 3, wobei das System mit Profilen versehen ist, **dadurch gekennzeichnet, dass** jedes Profil (130) an einem ersten äußeren Ende mit einem im Wesentlichen c-förmigen Teil (131) versehen ist, das ausgebildet ist, um das hakenförmige äußere Ende (108E) aufzunehmen.

6. System gemäß Anspruch 5, **dadurch gekennzeichnet, dass** jedes Profil (130) an einem zweiten äußeren Ende mit einem Anker (132) versehen ist, um das Profil an der Struktur zu befestigen.

7. System gemäß der Alternative von Anspruch 1 oder Anspruch 2, wobei das System mit Kabeln versehen ist, **dadurch gekennzeichnet, dass** das System Abstandshalter (22) umfasst, um einen vorgegebenen Abstand zwischen den Kabeln und der Struktur sicherzustellen, wobei wenigstens ein Teil der Abstandshalter mit einem Stützglied versehen sind.

8. Verfahren zum Abdecken einer Struktur, wie einer Wand oder eines Daches, mit dem System gemäß den Alternativen eines der vorhergehenden Ansprüche, wobei das System mit Profilen (130) oder Streifen (7; 107) versehen ist, wobei Schalen mit Pflanzen und/oder Platten, die in zumindest im Wesentlichen horizontalen Reihen und im Wesentlichen dazu senkrecht angeordneten Spalten angeordnet sind, an der Struktur nahezu ununterbrochen befestigt sind, wobei die Struktur in einer Richtung der Spalten zuvor mit Profilen (130) oder Streifen (7; 107) versehen ist, die parallel zueinander verlaufen und jeweils mit voneinander gleichmäßig beabstandeten Stützgliedern versehen sind, auf denen die Schalen abgestützt sind, **dadurch gekennzeichnet, dass** die Struktur in einer Richtung der Spalten zuvor mit den Profilen (130) oder Streifen (7; 107) des Systems versehen ist, wobei die Profile oder Streifen in der Struktur verankert sind, wobei jede Schale (6; 106) individuell zwischen zwei Stützgliedern (8; 108) einrastend aufgenommen und automatisch durch das Einrasten gesichert ist.

9. Verfahren zum Abdecken einer Struktur, wie einer Wand oder eines Daches, mit dem System gemäß der Alternative eines der vorhergehenden Ansprüche, wobei das System mit Kabeln (21) versehen ist, wobei Schalen mit Pflanzen und/oder Platten, die in zumindest im Wesentlichen horizontalen Reihen und im Wesentlichen dazu senkrecht angeordneten Spalten angeordnet sind, nahezu ununterbrochen an der Struktur befestigt sind, wobei die Struktur in einer Richtung der Spalten zuvor mit Kabeln (21) versehen ist, die parallel zueinander verlaufen und jeweils mit voneinander gleichmäßig beabstandeten Stützgliedern versehen sind, auf denen die Schalen abgestützt sind, **dadurch gekennzeichnet, dass** die Struktur in einer Richtung der Spalten zuvor mit den Kabeln des Systems versehen ist, wobei die Kabel über eine nicht-konkave Struktur gespannt sind und die Kabel die Stützglieder (8; 108) festhalten, wobei jede Schale (6; 106) individuell zwischen zwei Stützgliedern (8; 108) einrastend aufgenommen und automatisch durch das Einrasten gesichert ist.

10. Verfahren gemäß Anspruch 8 oder Anspruch 9, **dadurch gekennzeichnet, dass** die Schalen vor ihrer Montage mit einem Substrat befüllt werden, in dem Sedum, Moos oder Sukkulentien gepflanzt oder gesät werden.

11. Lärmschutzwand, versehen mit dem System gemäß den vorgenannten Ansprüchen 1 bis 7.

12. Lärmschutzwand gemäß Anspruch 11, versehen mit einem plattenartigen Teil, in welchem eine Ausnehmung (3) angeordnet ist, in der die Schalen mit Pflanzen und/oder Platten (2) angeordnet sind, und die mittels der Profile (130), Streifen (7; 107) oder Kabel (21) und den Stützgliedern (8; 108) an Platz gehalten werden.

13. Lärmschutzwand gemäß Anspruch 11 oder Anspruch 12, wobei die Lärmschutzwand mit zwei Trägern (4a, 4b) versehen ist, mit denen die Stabilität der Lärmschutzwand (1) sichergestellt wird.

14. Lärmschutzwand gemäß Anspruch 11, 12 oder 13, wobei die Lärmschutzwand mit Hebeösen (5a, 5b) versehen ist, die ausgebildet sind, um die Lärmschutzwand einschließlich der Pflanzschalen oder Platten (2) anzuheben.

## Revendications

1. Système pour couvrir au moins partiellement une structure, telle qu'un mur ou un toit, avec des plateaux contenant des plantes et/ou des plaques (2), lequel système est pourvu d'une pluralité de plateaux (6; 106), d'une pluralité de profilés (130) ou de bandes (7; 107) ou de câbles (21) qui sont adaptés à être attachés à la structure et une pluralité de membres support (8; 108) sur lesquels les plateaux peuvent reposer, lesquels membres support peuvent être attachés sur les profilés, les bandes ou les câbles de telle sorte que les plateaux peuvent être arrangés en colonnes et en rangées, dans lequel chaque membre support (8; 108) est pourvu d'une partie en forme générale de U (108A; 108B; 108C) et chaque plateau (6; 106) est pourvu d'un côté d'une première saillie (9; 109) et d'un côté opposé d'une deuxième saillie (10; 110), la première saillie (9 ; 109) étant destinée à être reçue dans la partie en forme de U d'un premier membre support (8; 108) et la deuxième saillie (10; 110) étant destinée à être placée contre la partie en U d'un deuxième membre support (8; 108) de telle sorte que chaque plateau peut être attaché de manière sécurisée à la structure au moyen d'au moins deux membres support.

2. Système selon la revendication 1 dans lequel les membres support (108) peuvent être montés de façon détachable sur les profilés (130), les bandes (7; 107) ou les câbles (21).

3. Système selon l'alternative de la revendication 1 ou la revendication 2 où le système est pourvu de profilés ou de bandes, dans lequel chaque membre support est pourvu d'une extrémité extérieure (108E) en forme de crochet et chaque bande (7; 107) ou chaque profilé (130) est adapté à recevoir l'extrémité extérieure en forme de crochet.

4. Système selon l'alternative de la revendication 3 où le système est pourvu de bandes, **caractérisé en ce que** chaque bande (7; 107) est pourvue d'une pluralité d'ouvertures (117) qui sont destinées à recevoir l'extrémité extérieure (1 08E) en forme de crochet.

5. Système selon l'alternative de la revendication 3 où le système est pourvu de profilés, **caractérisé en ce que** chaque profilé (130) est pourvu à une première extrémité extérieure d'une partie en forme générale de C (131) qui est destinée à recevoir l'extrémité extérieure (108E) en forme de crochet.

6. Système selon la revendication 5, **caractérisé en ce que** chaque profilé (130) est pourvu à une deuxième extrémité extérieure d'un élément d'ancrage (132) pour attacher le profilé sur la structure.

7. Système selon l'alternative de la revendication 1 ou de la revendication 2 où le système est pourvu de câbles, **caractérisé en ce que** le système comprend des écarteurs (22) pour créer une distance prédéterminée entre les câbles et la structure, au moins une partie des écarteurs étant pourvus d'un membre support.

8. Procédé pour couvrir une structure, telle qu'un mur ou un toit, avec le système selon les alternatives des revendications précédentes où le système est pourvu de profilés (130) ou de bandes (7; 107), dans lequel des plateaux avec des plantes et/ou des plaques, disposés en rangées au moins essentiellement horizontales et en colonnes au moins essentiellement perpendiculaires à celles-ci, sont attachés de façon pratiquement ininterrompue sur la structure, la structure étant pourvue préalablement, dans la direction des colonnes, de profilés (130) ou de bandes (7; 107) s'étendant parallèlement les uns aux autres et pourvus chacun de membres support équidistants les uns des autres et sur lesquels reposent les plateaux, **caractérisé en ce que** la structure est pourvue préalablement, dans la direction des colonnes, des profilés (130) ou des bandes (7; 107) dudit système, les profilés ou les bandes étant ancrés dans la structure, chaque plateau (6; 106) étant reçu individuellement par encliquetage entre deux membres support (8; 108) adjacents et sécurisé automatiquement suite à l'encliquetage.

9. Procédé pour couvrir une structure, telle qu'un mur ou un toit, avec le système selon les alternatives des revendications précédentes où le système est pourvu de câbles (21), dans lequel des plateaux avec des plantes et/ou des plaques, disposés en rangées au moins essentiellement horizontales et en colonnes au moins essentiellement perpendiculaires à celles-ci, sont attachés de façon pratiquement ininterrompue sur la structure, la structure étant pourvue préalablement dans la direction des colonnes de câbles (21) s'étendant parallèlement les uns aux autres et pourvus chacun de membres support équidistants les uns des autres et sur lesquels reposent les plateaux, **caractérisé en ce que** la structure est pourvue préalablement, dans la direction des colonnes, des câbles dudit système, les câbles étant tendus par-dessus une structure non concave et les câbles fixant les membres support (8 ; 108), chaque plateau (6; 106) étant reçu individuellement par encliquetage entre deux membres support adjacents et sécurisé automatiquement suite à l'encliquetage.

10. Procédé selon la revendication 8 ou 9, **caractérisé en ce que** les plateaux sont remplis avant leur montage avec un substrat dans lequel du sédon, de la mousse et/ou des plantes succulentes sont plantés ou semés.

11. Mur antibruit pourvu d'un système selon les revendications 1 à 7.

12. Mur antibruit selon la revendication 11 pourvu d'une partie en forme de plaque dans laquelle est réalisé un évidement (3) dans lequel les plateaux avec les plantes et/ou les plaques (2) sont disposés et maintenus en place en utilisant les profilés (130), les bandes (7; 107) ou les câbles (21) et les membres support (8 ; 108).

13. Mur antibruit selon la revendication 11 ou 12, dans lequel le mur antibruit est pourvu de deux supports (4a, 4b) qui assurent la stabilité du mur antibruit (1).

14. Mur antibruit selon les revendications 11, 12 ou 13, dans lequel le mur antibruit est pourvu d'oeillets de levage (5a, 5b) qui sont adaptés à soulever le mur antibruit incluant les plateaux à plantes ou les plaques (2).
